# FASCICULE DE BREVET EUROPEEN

(11) **EP 2 477 847 B1**
(45) Date de publication et mention de la délivrance du brevet: **25.12.2013**
(21) Numéro de dépôt: 10751992.8
(22) Date de dépôt: 09.07.2010
(51) Int. Cl.: B60R 19/18

(54) **AGENCEMENT D'UN DISPOSITIF D'ABSORPTION DE CHOCS POUR VEHICULE AUTOMOBILE**
ANORDNUNG EINER AUFPRALLABSORBIERENDEN KRAFTFAHRZEUGVORRICHTUNG
ARRANGEMENT OF A IMPACT ABSORBING DEVICE FOR A VEHICLE

(30) Priorité: 15.09.2009 FR 0956331
(43) Date de publication de la demande: 25.07.2012
(73) Titulaire: Renault S.A.S., 92100 Boulogne-Billancourt (FR)
(72) Inventeur: PERREUX, Philippe, F-78620 L'etang La Ville (FR)
(86) Numéro de dépôt international: PCT/FR2010/051459
(87) Numéro de publication internationale: WO 2011/033198

(56) Documents cités:
- EP-A- 1 864 864
- EP-A- 1 882 615
- WO-A-2006/114541
- FR-A- 2 736 315
- FR-A- 2 759 655

## Description

L'invention concerne un agencement d'un dispositif d'absorption de chocs pour véhicule automobile, dans lequel au moins un élément d'absorption de chocs est agencé entre une peau de bouclier et une traverse de structure, un jeu apte à permettre des opérations de montage étant ménagé entre l'élément d'absorption et la traverse.

Dans un véhicule, un agencement d'un dispositif d'absorption de chocs comporte généralement un bouclier et une traverse entre lesquels se trouvent des éléments d'absorption de chocs. Il est de plus souvent nécessaire de conserver un jeu de l'ordre de quelques millimètres entre la traverse et les éléments d'absorption de façon qu'il soit possible de procéder à des opérations de montage sur le véhicule. Cependant, lorsqu'on exerce une pression sur le bouclier, dans le cas où, par exemple, un utilisateur appuie à l'aide de sa main sur la surface du bouclier, la paroi du bouclier a tendance à se déplacer en raison du jeu de montage existant entre la traverse et les éléments d'absorption. Or cela peut donner à l'utilisateur la sensation, bien évidemment infondée, que le dispositif est peu robuste ou mal fixé, par exemple, et lui laisser ainsi une mauvaise impression en termes de qualité perçue.

Pour résoudre ce problème, il est connu du document FR-B1-2885096 déposé par la Demanderesse d'interposer entre la traverse et l'élément d'absorption un moyen de rattrapage de jeu, porté par une paroi de l'élément d'absorption et présentant la forme d'un prisme droit creux, dont les bases sont sensiblement hexagonales convexes. Deux faces opposées du prisme sont parallèles à la paroi de l'élément d'absorption, une de ces deux faces étant en contact avec la traverse. Le moyen de rattrapage est en matériau élastiquement déformable. Lorsqu'il est nécessaire de procéder à une opération de montage, l'élément de rattrapage de jeu peut se déformer élastiquement selon une direction longitudinale du véhicule lors d'un appui sur l'élément d'absorption, par pliage du moyen de rattrapage au niveau de ses arêtes latérales, puis revenir à sa forme initiale.

Cependant, lorsqu'un appui est exercé sur la peau de bouclier par un individu au moyen de sa main, l'effort n'est alors pas suffisant pour déformer le moyen de rattrapage de jeu. La peau de bouclier ne se déforme donc pas sous l'effet d'un tel appui que l'on peut considérer comme modéré, ce qui améliore la qualité perçue du véhicule.

Cependant, la forme en prisme du moyen de rattrapage nécessite un encombrement important qui n'est pas toujours compatible avec l'environnement de la pièce.

Afin de pallier ces inconvénients, l'invention a pour objet un agencement d'un dispositif d'absorption de chocs pour véhicule automobile, comprenant un moyen de rattrapage de jeu d'encombrement réduit.

A cet effet, l'invention propose un agencement d'un dispositif d'absorption de chocs pour véhicule automobile du type cité ci-dessus, caractérisé en ce que le moyen de rattrapage de jeu est une languette élastiquement déformable de plan médian P présentant une première extrémité liée à la paroi de l'élément d'absorption et une deuxième extrémité libre s'étendant à distance le long de la paroi et maintenue sous contrainte contre l'élément d'absorption.

Selon d'autres caractéristiques de l'invention:
- Le plan médian P de la languette est disposé verticalement de façon à pouvoir permettre le démoulage de la pièce selon la direction verticale.
- La languette est issue de moulage avec l'élément d'absorption.
- La languette est rapportée sur l'élément d'absorption.
- L'agencement comporte une pluralité de languettes.

D'autres caractéristiques et avantages de l'invention apparaîtront à la lecture de la description d'exemples de réalisation d'un agencement d'un dispositif d'absorption de chocs en référence aux dessins annexés dans lesquels :
- La figure 1 est une vue en perspective et en éclaté de l'agencement selon l'invention.
- La figure 2 est une vue d'un détail de l'agencement de la figure 1.
- La figure 3 est une vue schématique de dessus d'un détail de l'agencement.
- La figure 4 est une vue schématique latérale selon la direction IV-IV du détail de la figure 3.

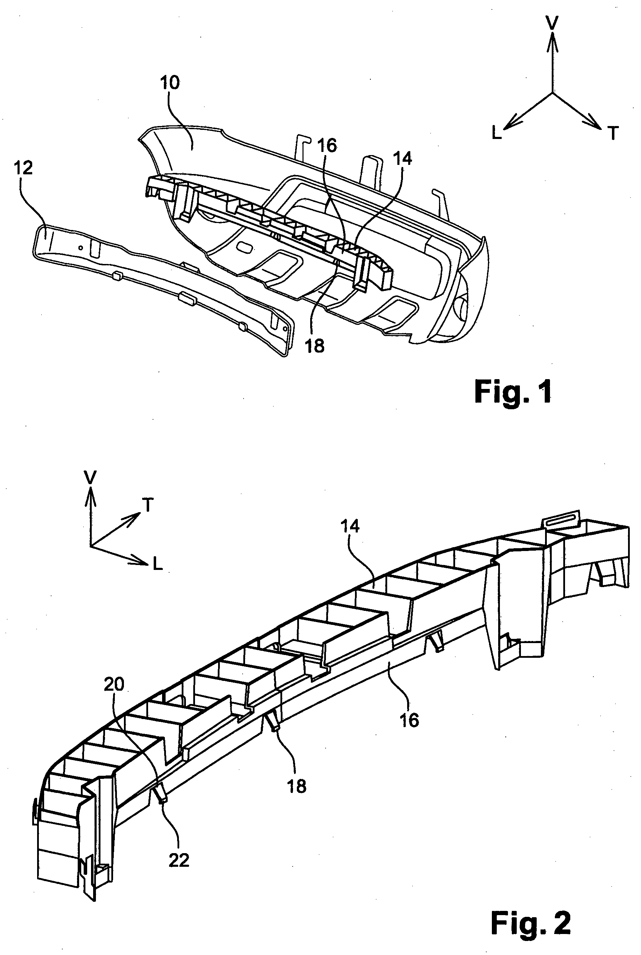

Dans la description qui suit, nous prendrons à titre non limitatif une orientation longitudinale, verticale et transversale indiquée par le trièdre L,V,T des figures 1 à 4.

Tel que représenté à la figure 1, un agencement d'un dispositif d'absorption de chocs pour véhicule automobile comporte une peau de bouclier 10 et un élément de structure tel qu'une traverse 12, entre desquels est agencé un élément d'absorption 14. Dans le mode de réalisation décrit ici, l'élément d'absorption 14 présente la forme d'une poutre qui s'étend selon une direction transversale et qui est solidaire de la peau de bouclier 10.

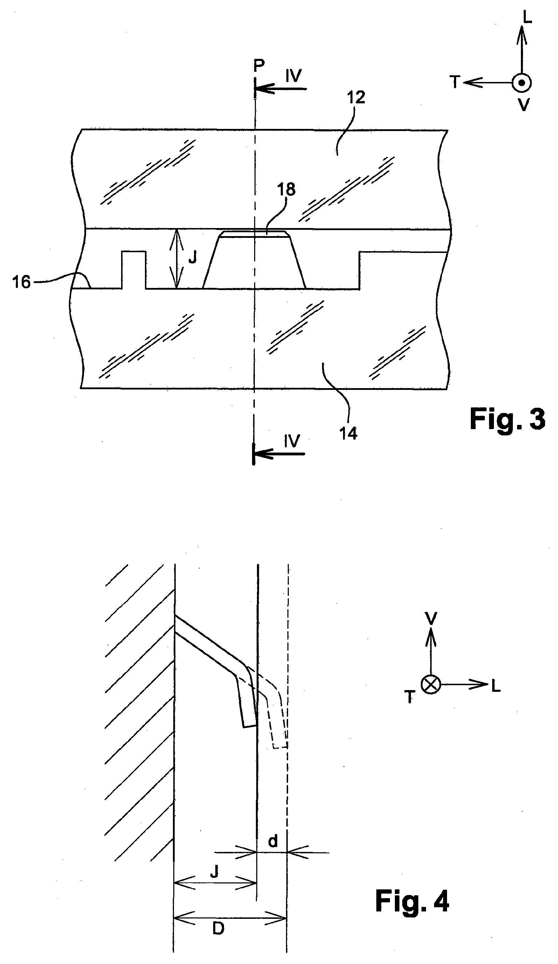

Tel que représenté à la figure 3, afin de permettre certaines opérations de montage sur le véhicule, il existe un jeu J, de l'ordre d'une dizaine de millimètres, entre la traverse 12 et l'élément d'absorption 14.

Tel que représenté à la figure 2, une paroi 16 de l'élément d'absorption 14 porte un moyen de rattrapage de jeu 18 de façon qu'il soit agencé entre ledit élément d'absorption 14 et la traverse 12.

Le moyen de rattrapage 18 présente la forme d'une languette élastiquement déformable de plan médian P, comportant une première extrémité 20 solidaire de la paroi 16 et une deuxième extrémité libre 22. La languette s'étend à distance le long de la paroi 16.

Dans le mode de réalisation décrit ici, la première extrémité 20 de la languette présente un angle d'environ 30° par rapport à la paroi 16. Cet angle peut varier en fonction de la distance de la zone d'appui par rapport à la traverse 12. L'angle ne doit pas excéder 45°de manière à limiter les efforts de montage.

La paroi 22 est orientée selon un plan vertical et présente une longueur minimale de 5 millimètres. Tel que représenté à la figure 4, lorsque Ca languette est en position de repos (représentée en trait pointillé sur la figure), la distance D entre la paroi 16 et la paroi 22 est supérieure au jeu J d'une longueur d. Cette longueur d est au moins égale à 5 millimètres de façon que la languette puisse être mise sous contrainte contre l'élément d'absorption 14. Ainsi, en position de repos, la paroi 22 se situe environ à une distance minimale de 15 millimètres de la paroi 16.

L'ensemble du moyen de rattrapage 18 présente une largeur d'environ 12 millimètres. Cette largeur peut varier en fonction de l'effort souhaité mais aussi en fonction du nombre de languettes présentes.

Le moyen de rattrapage 18 peut être venu de matière sur la paroi 16 de l'élément d'absorption 14 ou bien être rapporté par vissage, ce qui permet de livrer l'élément d'absorption 14 directement en bord de chaîne. Ainsi il n'est pas nécessaire lors du montage d'effectuer d'opération supplémentaire, le moyen de rattrapage de jeu 18 étant déjà en place.

Dans le cas où le moyen de rattrapage de jeu 18 est moulé avec l'élément d'absorption 14, le plan médian P de la languette est orienté sensiblement selon une direction verticale de façon à permettre le démoulage selon une direction verticale de la pièce lors du processus de fabrication de l'élément d'absorption 14.

Ainsi, lorsqu'il est nécessaire de procéder à une opération de montage, l'élément de rattrapage de jeu 18 peut se déformer élastiquement selon une direction longitudinale lors d'un appui sur l'élément d'absorption 14 par déformation de la languette, puis revenir à sa forme initiale.

Cependant, lorsqu'un appui est exercé sur la peau de bouclier 12 par un individu au moyen de sa main, l'effort n'est alors pas suffisant pour déformer le moyen de rattrapage de jeu 18. La peau de bouclier 12 ne se déforme donc pas sous l'effet d'un tel appui que l'on peut considérer comme modéré, ce qui améliore la qualité perçue du véhicule.

Le moyen de rattrapage 18 selon l'invention présente donc l'avantage, par rapport au moyen de rattrapage de l'état de la technique, d'avoir un faible encombrement. En effet, dans le cas du moyen de rattrapage selon l'invention, l'effort élastique est réalisé sur l'équivalent d'un quart du moyen de rattrapage selon l'état de la technique, si l'on considère que le moyen de rattrapage selon l'état de la technique est formé par quatre languettes selon l'invention accolées les unes aux autres.

Ainsi, les moyens de rattrapage selon l'état de la technique permettent de combler des jeux J importants, tandis que dans le cas d'architectures réduites, c'est-à-dire lorsque le jeu est de l'ordre de 10 millimètres, il peut être prévu quatre languettes selon l'invention, pour un résultat équivalent à la technique actuelle.

## Revendications

1. Agencement d'un dispositif d'absorption de chocs pour véhicule automobile, dans lequel au moins un élément d'absorption de chocs (14) est agencé entre une peau de bouclier (10) et une traverse de structure (12), un jeu (J) apte à permettre des opérations de montage étant ménagé entre l'élément d'absorption (14) et la traverse (12) et dans lequel un moyen de rattrapage de jeu (18), porté par une paroi (16) de l'élément d'adsorption (14), est agencé entre l'élément d'absorption (14) et la traverse (12), de façon à limiter la déformation de la peau de bouclier (10) lorsqu'elle est soumise à un effort modéré tout en permettant les opérations de montage, **caractérisé en ce que** le moyen de rattrapage de jeu (18) est une languette élastiquement déformable de plan médian (P) présentant une première extrémité liée à la paroi (16) de l'élément d'absorption (14) et une deuxième extrémité libre s'étendant à distance le long de la paroi (16) et maintenue sous contrainte contre l'élément d'absorption (14).

2. Agencement d'un dispositif d'absorption de chocs selon la revendication 1, **caractérisé en ce que** le plan médian (P) de la languette est disposé verticalement de façon à pouvoir permettre le démoulage de la pièce selon la direction verticale.

3. Agencement d'un dispositif d'absorption de chocs selon l'une quelconque des revendications précédentes, **caractérisé en ce que** la languette est issue de moulage avec l'élément d'absorption (14).

4. Agencement d'un dispositif d'absorption de chocs selon la revendication 1, **caractérisé en ce que** la languette est rapportée sur l'élément d'absorption (14).

5. Agencement d'un dispositif d'absorption de chocs selon la revendication 1, **caractérisé en ce qu'**il comporte une pluralité de languettes.

## Patentansprüche

1. Anordnung einer stoßabsorbierendenen Vorrichtung für ein Kraftfahrzeug, bei der mindestens ein stoßabsorbierendenes Element (14) zwischen einer Stoßfängerhaut (10) und einem Strukturquerträger (12) angeordnet ist, wobei ein Montagearbeiten gestattendes Spiel (J) zwischen dem absorbierenden Element (14) und dem Querträger (12) ausgebildet ist, und bei der ein von einer Wand (16) des absorbierenden Elements (14) getragenes Spieleinstellmittel (18) zwischen dem absorbierenden Element (14) und dem Querträger (12) dahingehend angeordnet ist, die Verformung der Stoßfängerhaut (10), wenn sie einer mäßigen Kraft ausgesetzt wird, zu begrenzen und gleichzeitig die Montagearbeiten zu gestatten, **dadurch gekennzeichnet, dass** das Spieleinstellmittel (18) eine elastisch verformbare Zunge mit einer Mittelebene (P) ist, die ein mit der Wand (16) des absorbierenden Elements (14) verbundenes erstes Ende und ein sich in einem Abstand entlang der Wand (16) erstreckendes zweites, freies Ende aufweist und unter Spannung am absorbierenden Element (14) gehalten wird.

2. Anordnung einer stoßabsorbierendenen Vorrichtung nach Anspruch 1, **dadurch gekennzeichnet, dass** die Mittelebene (P) der Zunge vertikal angeordnet ist, um ein Entformen des Teils in der vertikalen Richtung zu gestatten.

3. Anordnung einer stoßabsorbierendenen Vorrichtung nach einem der vorhergehenden Ansprüche, **dadurch gekennzeichnet, dass** die Zunge einstückig mit dem absorbierenden Element (14) geformt ist.

4. Anordnung einer stoßabsorbierendenen Vorrichtung nach Anspruch 1, **dadurch gekennzeichnet, dass** die Zunge am absorbierenden Element (14) angebracht ist.

5. Anordnung einer stoßabsorbierendenen Vorrichtung nach Anspruch 1, **dadurch gekennzeichnet, dass** sie mehrere Zungen umfasst.

## Claims

1. Shock absorption device arrangement for a motor vehicle, in which at least one shock absorbing element (14) is arranged between a bumper skin (10) and a structural crossmember (12), a clearance (J) designed to allow mounting operations being left between the absorption element (14) and the crossmember (12) and in which a clearance compensation means (18), carried by one wall (16) of the absorption element (14), is arranged between the absorption element (14) and the crossmember (12) in order to limit the deformation of the bumper skin (10) when it is subjected to a modest loading while at the same time allowing the mounting operations, **characterized in that** the clearance compensation means (18) is an elastically deformable tab of median plane (P) having a first end connected to the wall (16) of the absorption element (14) and a free second end extending some distance along the wall (16) and held under stress against the absorption element (14) .

2. Shock absorption device arrangement according to Claim 1, **characterized in that** the median plane (P) of the tab is arranged vertically so as to allow the component to be demoulded in the vertical direction.

3. Shock absorption device arrangement according to either one of the preceding claims, **characterized in that** the tab is moulded as one with the absorption element (14).

4. Shock absorption device arrangement according to Claim 1, **characterized in that** the tab is attached to the absorption element (14).

5. Shock absorption device arrangement according to Claim 1, **characterized in that** it comprises a plurality of tabs.
